# EUROPEAN PATENT SPECIFICATION

(11) **EP 1 557 831 B1**
(45) Date of publication and mention of the grant of the patent: **28.12.2011**
(21) Application number: 03809422.3
(22) Date of filing: 29.08.2003
(51) Int. Cl.: G11B 17/04, G11B 33/02, G11B 33/08

(54) **DISK-LOADING DEVICE**
PLATTELADEEINRICHTUNG
DISPOSITIF DE CHARGEMENT DE DISQUE

(30) Priority: 24.10.2002 JP 2002310021
(43) Date of publication of application: 27.07.2005
(73) Proprietor: MITSUBISHI DENKI KABUSHIKI KAISHA, Chiyoda-ku Tokyo 100-8310 (JP)
(72) Inventor: FUKASAWA, Akihiro, Digital Atec Ltd., Nagaokakyo City, Kyoto 617-8550 (JP)
(74) Representative: Whitlock, Holly Elizabeth Ann
(86) International application number: PCT/JP2003/011013
(87) International publication number: WO 2004/038718

(56) References cited:
- JP-A- 8 190 755
- JP-A- 10 214 446
- JP-A- 11 339 350
- JP-A- 2001 216 703
- JP-A- 2001 291 302
- KR-A- 20020 069 547

## Description

### Technical Field

The present invention relates to a disc loading device suitably used in a compact disc player.

### Background Art

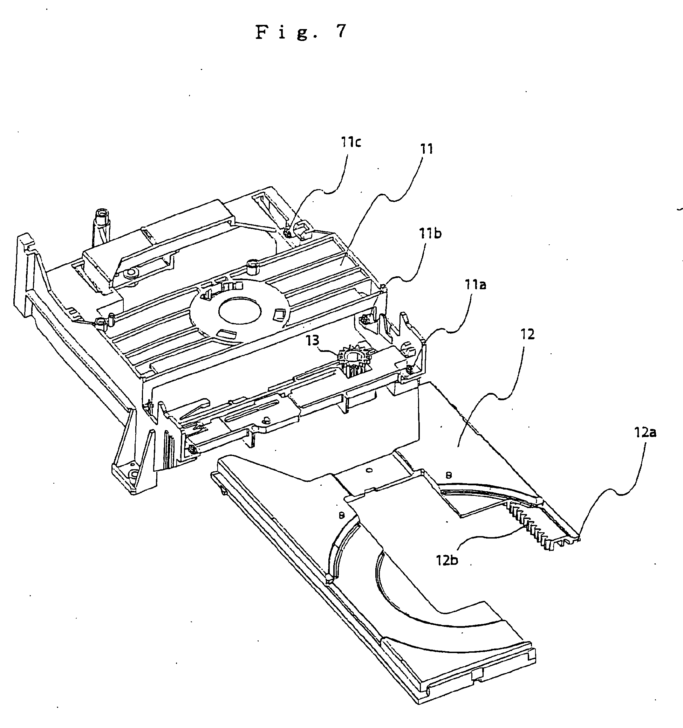

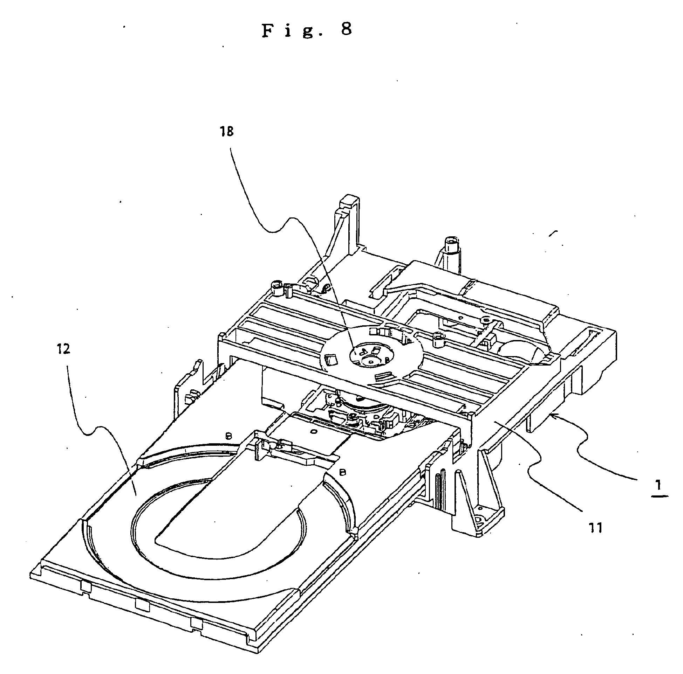

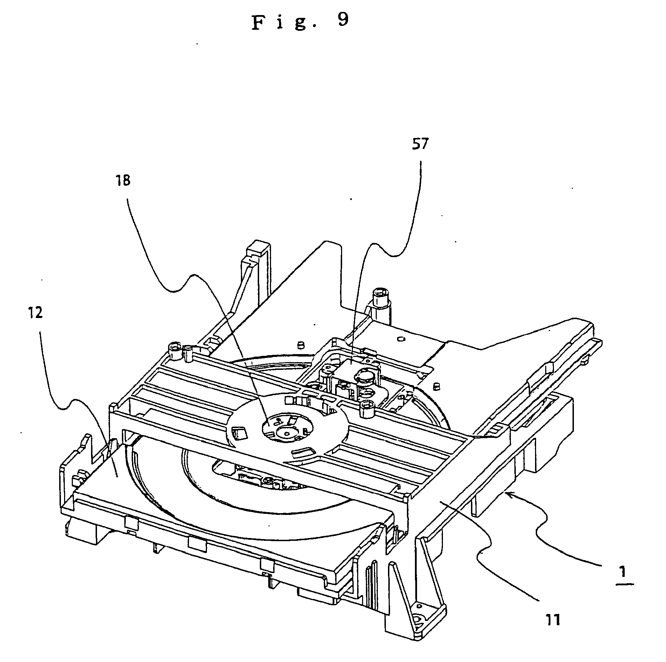

Conventional disc loading devices used in, for example, optical disc devices have been configured as shown in FIGS. 7 to 9. FIG. 7 is an exploded view of a disc loading device, FIG. 8 is a perspective view showing a tray in an unloaded state, and FIG. 9 is a perspective view showing the tray in a loaded state. As shown in FIG. 7, a rotating gear 13 is disposed in a main chassis 11, and torque is transmitted to the rotating gear 13 from a loading motor (not shown). The rotating gear 13 meshes with a rack 12b disposed at a tray 12, and the rotational motion of the rotating gear 13 is converted to rectilinear motion, whereby the tray is loaded in the main chassis and unloaded from the main chassis. However, because the rack 12b and the rotating gear 13 are disposed at the side of the device, the position of the point where the force pulling the tray 12 into the main chassis 11 acts, which is at the position where the rack 12b and the rotating gear 13 mesh, does not coincide with the center of gravity of the tray 12 at the substantial center portion of the disc placement surface. Thus, a moment centered around the center of gravity of the tray 12 arises, and the tray 12 becomes rotationally displaced. For this reason, immediately after the start of the loading of the tray from the tray unloaded state of FIG. 8 to the tray loaded state of FIG. 9, and immediately before the end of the unloading of the tray from the tray loaded state of FIG. 9 to the tray unloaded state of FIG. 8, vibratory oscillation of the tray 12 occurs, and an abnormal noise such as rattling occurs.

The displacement amount of the oscillation is a maximum at the unloading-direction distal end portion of the tray 12, and is regulated by the size of a gap between a guide groove 12a disposed in both end portions of the tray and guides 11a, 11b and 11c disposed at the main chassis. This gap is disposed in order to avoid a state where the guide groove 12a pressingly fits into and slides in the guides 11a, 11b and 11c. The displacement at this distal end portion is dependent on things other than the guide groove 12a and the guides 11a, 11b and 11c; specifically, it is dependent on the distance between the first guide 11a and the second guide 11b disposed at the main chassis 11, and also on the depth dimension of the tray 12 or the guide groove 12a. As for restrictions on the depth dimension of the device and the unloading amount of the tray 12, the degree of freedom of the substantial design is extremely small because a stroke equal to or greater than the diameter of the disc is required. Thus, the displacement of the unloading-direction distal end portion of the tray 12 at the time of the oscillation may be said to be controlled by the width of the guide groove 12a and the gap with the first guide 11a and the second guide 11b.

Usually, because the linearity in the loading/unloading direction of the guide groove 12a is 0.2 mm, it is necessary to make the gap between the guide groove 12a and each guide 11a, 11b and 11c on the main chassis 11 be about 0.25 mm to about 0.35 mm in order to avoid the state where the guide groove 12a and the guides 11a, 11b and 11c pressingly fit together and slide at the time of loading/unloading.

As usual design values, in a case where, for example, the distance between the first guide groove 11a and the second guide groove 11b is 35mm, and where the distance from the position where the rotating gear 13 in the tray unloaded state drives the rack 12b to the unloading-direction distal end portion of the tray 12 is 175 mm, the displacement amount at the unloading-direction distal end portion of the tray 12 at the time of the oscillation becomes about five times the gap between the guide groove 12a and each guide 11a, 11b and 11c. When the gap is 0.25 mm, the displacement amount becomes about 1.25 mm, and when the gap is 0.4 mm, the displacement amount becomes about 2.00 mm.

In this manner, the vibratory oscillation immediately after the start of the unloading of the tray and immediately before the end of the unloading of the tray causes the operating quality to significantly drop, but this does not become a problem in terms of operating quality as long as the displacement of the tray unloading-direction distal end portion can be held to about 1 mm or less. Thus, even if oscillation arises, this does not become much of a problem in terms of operating quality as long as the gap between the guide groove 12a and the guides 11a, 11b and 11c on the main chassis 11 can be managed to 0.2 mm or less. However, in the conventional disc loading device, the gap between the guide groove 12a and the guides 11a, 11b and 11c on the main chassis 11 has not been able to be set to 0.2 mm or less because, as mentioned above, the precision of the linearity of the guide groove 12a disposed in the tray 12 has been about 0.2 mm.

The reason for this is because when the gap is lower than 0.2 mm, the problem arises that when the guide groove 12a is guided by the guides 11a, 11 b and 11c on the main chassis, it pressingly fits into and slides, leading to a remarkable drop in the operating speed in the tray 12 due to an increase in the operating load, and the motor (not shown) cannot drive the tray 12.

JP2001 291302 A relates to a sliding mechanism for a tray structure to equip a device with a disk. Two guides 15, 16 constitute a sliding mechanism and three pins 12, 13, 14 are switched in accordance with their operating ranges to suppress a roll of the tray before the end of the unloading of the tray.

JP 11 339 350 A relates to a disk driving gear constituted to reduce oscillation when a disk is rotated at high speed. A flat spring 6 fixes the tray by way of protrusions 6a, 6b, acting in a direction perpendicular to the plane of the disc when the tray is in the loaded position.

KR2002-0069547 relates to a disk drive having vibration-preventing structures associated with guide grooves.

### Disclosure of the Invention

The present invention has been made in order to solve the above-described problem, and it is an object thereof to obtain a disc loading device where, because vibratory oscillation of the tray 12 is suppressed to an extent that it does not become a problem in terms of operating quality, the problems of an extreme drop in speed and inoperability do not occur even if the gap between the guide groove 12a and the guides 11a, 11b and 11c on the main chassis 11 is configured to be 0.2 mm or less, and to obtain a disc loading device that can suppress vibratory oscillation of the tray 12 without dependency on the gap between the guide groove 12a and the guides 11 a, 11b and 11c on the main chassis 11.

The invention provides a disc loading device as set out in claim 1.

### Brief Description of the Drawings

FIG. 1 is a cross-sectional view in an instance where a guide groove in a tray unloaded state of a disc loading device pertaining to a first example is seen from below a main chassis.
FIG. 2 is an exploded view of a disc loading device of a first embodiment of the invention.
FIG. 3 is a perspective view of relevant portions of the disc loading device of the first embodiment of the invention.
FIG. 4 is a cross-sectional view in an instance where a guide groove in a tray unloaded state of the disc loading device of the first embodiment of the invention is seen from below the main chassis.
FIG. 5 is a cross-sectional view in an instance where a guide groove in a tray unloaded state of a disc loading device of a second embodiment of the invention is seen from below the main chassis.
FIG. 6 is a cross-sectional view in an instance where a guide groove in a tray unloaded state of a disc loading device of a third embodiment of the invention is seen from below the main chassis.
FIG. 7 is an exploded view showing a conventional disc loading device.
FIG. 8 is a perspective view of the conventional optical disc device showing a tray in an unloaded state
FIG. 9 is a perspective view of the conventional optical disc device showing the tray in a loaded state.

### Best Modes for Implementing the Invention

### Example 1

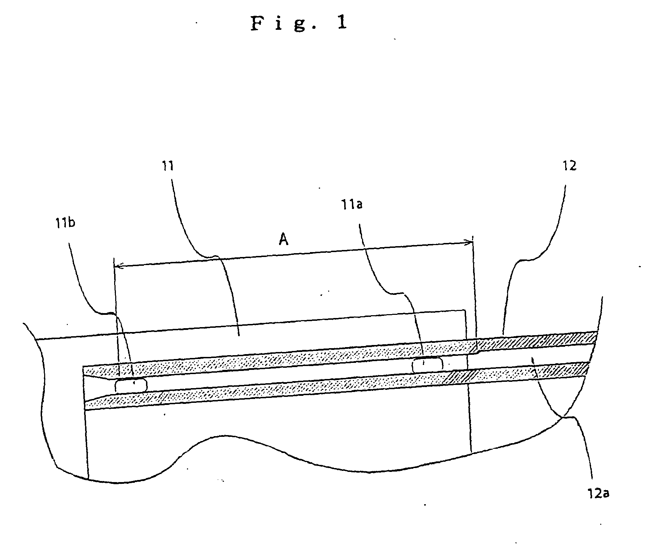

FIG. 1 shows a disc loading device of a first example, and is a cross-sectional view in an instance where a guide groove 12a in the vicinity of a loading start position of a tray 12 is seen from below a main chassis 11. The tray 12, in which a disc is placed and in which the guide groove 12a parallel to a loading/unloading direction is disposed, is loaded in and unloaded from the main chassis 11, in which guides 11a and 11b that engage with the guide groove are disposed.

The guide groove 12a includes a section A where the width in the vicinity of the loading start position of the tray 12 is narrowly formed. The section A is configured so that a gap between the guide groove 12a and the guides 11a, 11b and 11c is 0.1 mm to 0.2 mm. The gap between the guide groove 12a and the guides 11a, 11b and 11c in the section A is determined by the linearity of the guide groove 12a, and the linearity is proportion to the length of the guide groove. In the instance of the first example, the total length of the guide groove is 200 mm, whereby precision of about 0.05 mm can be easily obtained by making the length of the section A about 45 mm, and the configuration at the gap becomes possible. Because the width of the guide groove 12a at the portion other than the section A is formed so that the gap with the guides 11a, 11b and 11c becomes 0.25 mm to 0.35 mm, loading/unloading at a light load is conducted without there arising a reduction in the gap with the guides 11a, 11b and 11c after the guides 11a, 11b and 11c pass through the section A and an increase in load resulting from constriction.

In the disc loading device configured in this manner, the loading of the tray 12 starts as a result of a rotating gear 13 being rotationally driven by a loading motor (not shown) from the state of FIG. 8, which is a tray unloaded state. When the loading starts, the torque of the motor is transmitted to a rack 12b from the rotationally driven rotating gear 13, and the rotational motion of the rotating gear 13 is converted by the rack 12b to rectilinear motion. As a result, the guide groove 12a is guided by the guides 11a, 11b and 11c, whereby the tray 12 is loaded in the main chassis 11 and finally reaches the loaded state shown in FIG. 9.

When the tray 12 is loaded in the main chassis 11, the disc is retained by a clamper 18 shown in FIG. 9 and a turntable (not shown), and tray loading ends.

The loading of the tray 12 is conducted as described above, but immediately after the start thereof, similar to the conventional disc loading device, vibratory oscillation temporarily arises due to the moment around the center of gravity of the tray resulting from a shift between the position of the center of gravity of the tray and the point where the force with which the rotating gear 13 drives the rack 12b acts. However, the displacement of this oscillation becomes a maximum of 1 mm at the unloading-direction distal end position of the tray 12 because the gap between the guide groove 12a and the guides 11a, 11b and 11c is a maximum of 0.2 mm, so that high quality tray loading is conducted, and the occurrence of abnormal noises can be suppressed.

Because the oscillation is suppressed, relative motion between the tray 12 and the disc placed in the tray 12 is also suppressed. For this reason, damage to the disc recording surface resulting from accompanying relative motion between the disc recording surface and the tray placement surface can be prevented. Also, at the time the disc is to be retained, there is little shift between the center of the disc and the center of the disc retention unit comprising the turntable (not shown) and the clamper 18, and retention of the disc can be smoothly conducted.

The unloading of the tray 12 also starts as a result of the rotating gear 13 being rotationally driven by the motor (not shown), and the same oscillation seen immediately after loading of the tray 12 also occurs immediately before the end of the unloading of the tray 12. However, in this instance also, similar to the loading of the tray 12, the displacement at the unloading-direction distal end position of the tray 12 is a maximum of 1 mm, and high quality unloading of the tray 12 is conducted.

By disposing at least two guides that engage with the portion of the guide groove where the width is narrowly formed, the parallel state between the loading/unloading direction and the guide groove is more reliably maintained at the time loading starts and at the time unloading ends, and the higher quality tray unloading can be obtained.

### Example 2.

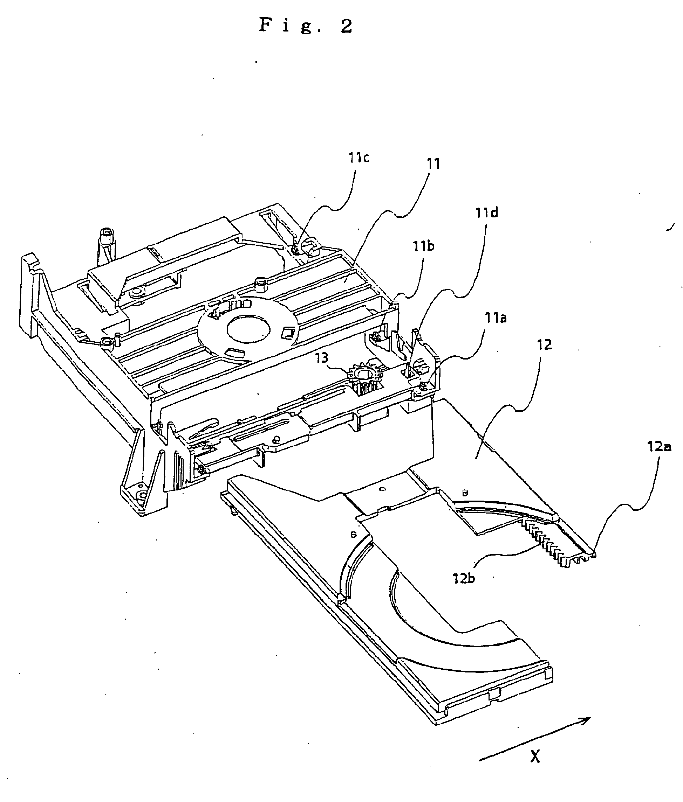

FIGS. 2 to 4 are diagrams showing a second example.

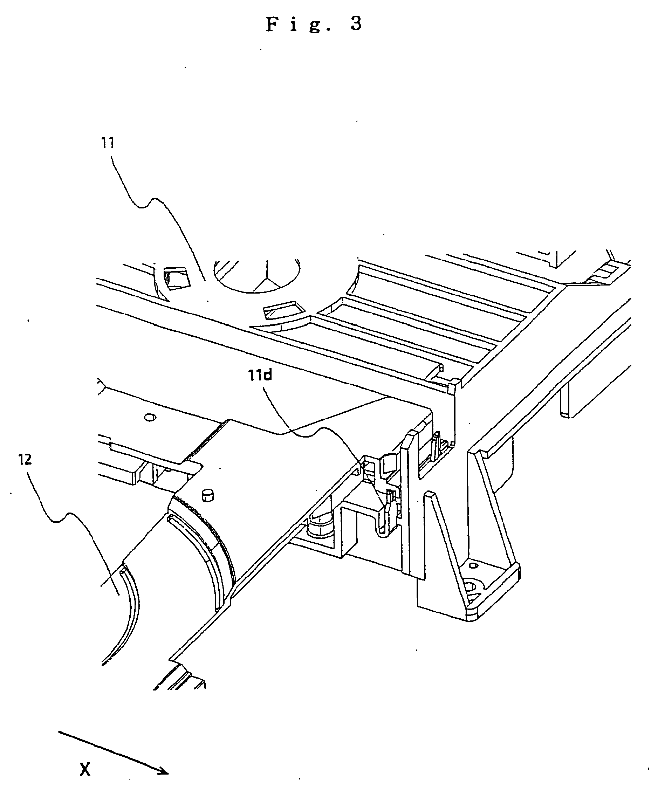

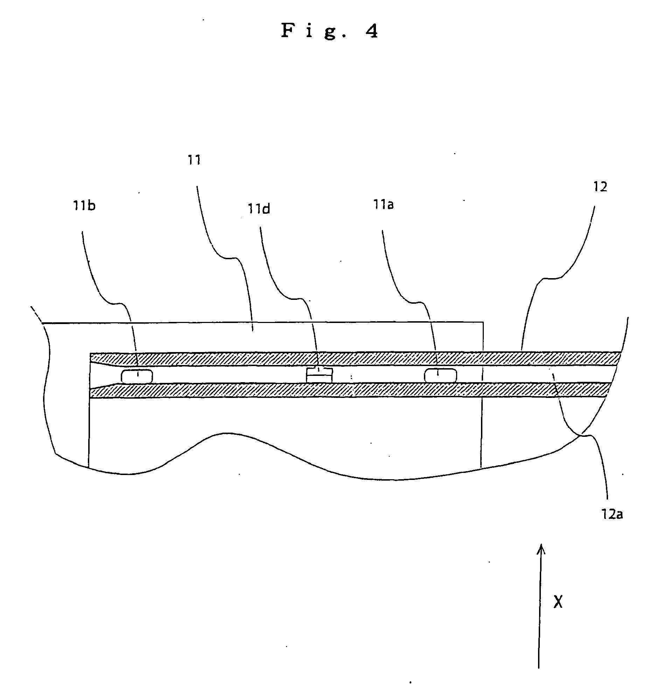

FIG. 2 is an exploded view of the disc loading device of the second example, of the invention, FIG. 3 is a perspective view of relevant portions of the disc loading device of the second example, and FIG. 4 is a cross-sectional view in an instance where the guide groove 12a in the tray unloaded state of the disc loading device of the second example is seen from below the main chassis 11.

The configuration of the second example is substantially the same as that of the first example, except that in the second example, the gap between the guide groove 12a and the guides 11a, 11b and 11c is constant (e.g., 0.25 mm to 0.35 mm) across the total length of the guide groove 12a to the extent that fitting together and sliding canbe prevented, and an elastic body 11d (e.g., a plate spring), which presses at least one side wall of the guide groove 12a and the guides 11a, 11b and 11c into contact in the X direction shown in the drawings or the direction opposite to this at the time of loading/unloading of the tray 12, is integrally disposed at the main chassis 11.

In the present example also, the loading/unloading of the tray 12 is conducted in the same manner as in the first example and the gap between the guide groove 12a and the guides 11a, 11b and 11c is present (0.25 mm to 0.35 mm) similar to the conventional device, whereby the vibratory oscillation immediately after the start of the loading and immediately before the end of the unloading of the tray 12 similarly arises. However, because the side wall of the guide groove 12a is pressed by the elastic body 11d into contact with the guides 11a, 11b and 11c, the oscillation is suppressed, and similar to the first example high quality loading/unloading of the tray 12 is conducted.

### Embodiment 1

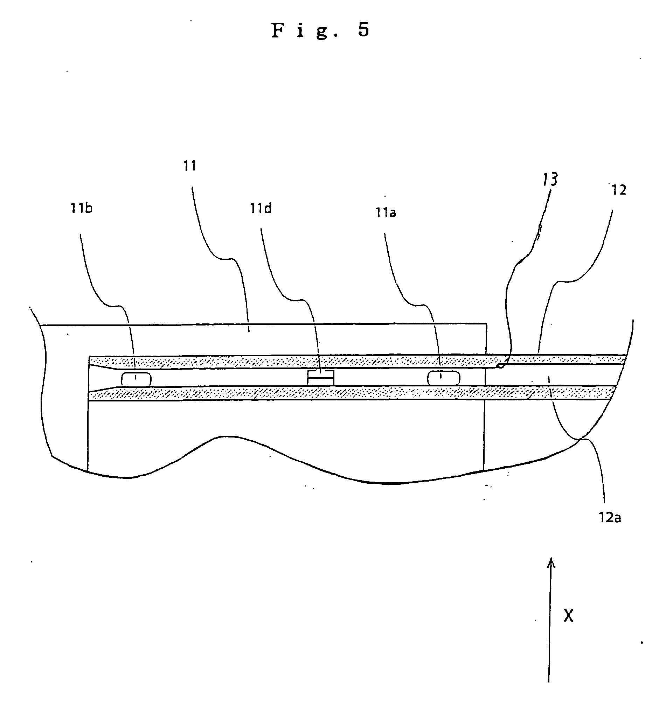

FIG. 5 shows the disc loading device of a first embodiment of the invention, and is a cross-sectional view in an instance where the guide groove 12a in the tray unloaded state of the disc loaded device is seen from below the main chassis 11.

The first embodiment is one where the second example is developed, and the configuration is substantially the same as that of the second example, except that in the first embodiment, a step 13 is disposed, in the vicinity of the loading start position of the tray 12, in the side wall of the guide groove 12a that is acted upon by lateral pressure due to the elastic body 11d.

The loading/unloading of the tray 12 is conducted in the same manner as in the second example, and the vibratory oscillation immediately after the start of loading and immediately before the end of unloading of the tray 12 is similarly generated. However, because the side wall of the guide groove 12a is pressed into contact with the guides 11a, 11b and 11c by the elastic body 31d, the oscillation is suppressed, and high quality loading/unloading of the tray 12 is conducted similar to the first example.

Also, in the vicinity of the loading start position of the tray 12, the step 13 is disposed in the side wall of the guide groove 12a that is acted upon by lateral pressure due to the elastic body 11d. Thus, the displacement of the elastic body 11d in the vicinity of the loading start position becomes larger than the displacement at another portion. As a result, lateral pressure can effectively act on the side wall of the guide groove 12a only in the vicinity of the loading start position of the tray 12. Thus, the driving force necessary to load/unload the tray 12 can be reduced in comparison to the second example, in terms of the overall operation. Namely, when the motor is driven at a constant voltage, the loading/unloading of the tray 12 can be conducted with a light load, and the operating speed of the tray 12 can be lowered enormously. Also, because the friction between the side wall of the guide groove 12a and the press-contact portion of the elastic body 11d accompanying repeated loading/unloading of the tray 12 can be reduced, the change in the lateral pressure acting on the tray 12 is slight even after loading/unloading of the tray 12 has been repeated numerous times, and high quality loading/unloading of the tray 12 can be conducted over a long period of time. This effect becomes larger as the displacement of the elastic body 11d other than in the vicinity of the loading start position of the tray 12 approaches zero.

In an instance where the guides 11a, 11b and 11c are plurally disposed in the vicinity of the loading start position of the tray 12, as in the second example and first embodiment, elastic bodies 11d are disposed between adjacent guides 11a, 11b and 11c, whereby the side wall of the guide groove 12a pressingly contacts the same-direction side surfaces of adjacent guides 11a, 11b and 11c. Thus, the loading/unloading of the tray 12 is conducted in a state where the parallelism between the main chassis 11 and the tray 12 is maintained, so that higher quality loading/unloading is obtained. Also, in an instance where the elastic body is plurally disposed in the vicinity of the loading start position of the tray 12, the same effect is obtained even if the guides 11a, 11b and 11c are disposed between adjacent elastic bodies.

### Embodiment 2.

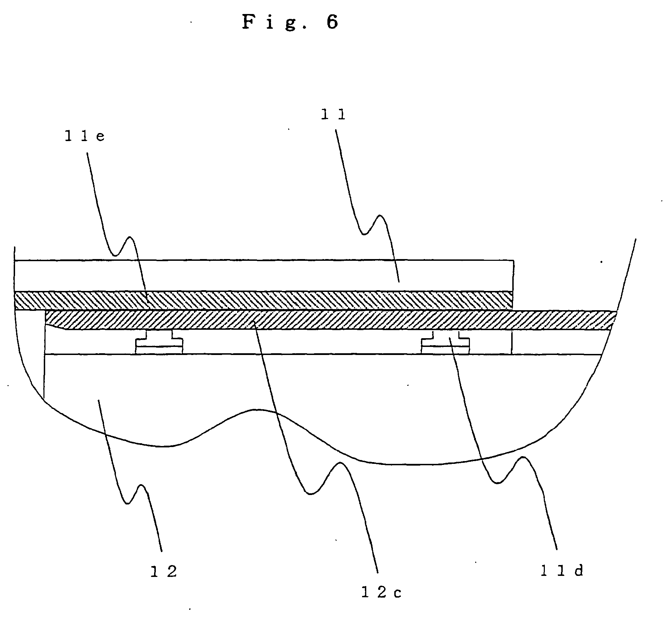

FIG. 6 is a diagram showing a second embodiment of this invention, and is a cross-sectional view in an instance where the guide groove 12a in the tray unloaded state of the disc loading device is seen from below the main chassis 11.

A lateral pressure wall 12c is disposed in the tray 12 parallel to the loading/unloading direction, and a guide wall 11e is disposed in the main chassis 11 parallel to the lateral pressure wall 12c. The tray 12, in which a disc is disposed, is loaded in and unloaded from the main chassis 11 by the lateral pressure wall 12c and the guide wall 11e. Additionally, the lateral pressure wall 12c and the guide wall 11e are pressed into contact, at the time of the loading/unloading of the tray 12, by elastic bodies 11d disposed in the main chassis 11.

The guide wall 11e does not have to be continuously disposed parallel to the lateral pressure wall 12c as shown in FIG. 6, but may be disposed intermittently in pairs with the elastic bodies 11d, for example.

The loading/unloading of the tray 12 is conducted in the same manner as in the first example. The lateral pressure wall 12c disposed in the tray 12 is guided by the guide wall 11e disposed parallel to the lateral pressure wall 12c, whereby the tray 12 is loaded in the main chassis 11 and finally reaches the loaded state shown in FIG. 9. In the second embodiment also, vibratory oscillation immediately after the start of loading or immediately before the end of unloading of the tray 12 occurs in the same manner as the in the first example. However, because the lateral pressure wall 12c is pressed into contact with the guide wall 11e by the elastic bodies 11d, the oscillation is suppressed, and high quality loading/unloading of the tray 12 is conducted.

By disposing at least two elastic bodies 11d in the vicinity of the loading start position, the parallel state between the guide wall 11e and the lateral pressure wall 12c is maintained during the loading/unloading of the tray 12, whereby higher quality tray loading/unloading can be obtained.

Also, by disposing a step in the guide wall 11e and reducing the lateral pressure given to the other portion to be lower, to an extent that does not affect the loading/unloading operation of the tray 12, than the lateral pressure given to the guide wall 11e in the vicinity of the loading start position, high quality loading/unloading of the tray 12 over a long period of time can be obtained in the same manner as in the first embodiment.

The guide groove 12a and the guides 11a, 11b and 11c of the first example, second example and first embodiment and the guide wall 11e and the lateral pressure wall 12c of the first embodiment, may be disposed in either the tray 12 or the main chassis 11. The same is true of the elastic body 11d of the first example, first and second embodiments.

Also, the elastic body 11d does not have to be a plate spring; it suffices as long as the elastic body 11d can give appropriate lateral pressure to the side wall of the guide groove 12a or the lateral pressure wall 12c, such as rubber or a coil spring.

Also, the elastic body 11d may be configured separately from the main chassis 11 or the tray 12 as needed, but by forming the elastic body 11d integrally with the main chassis 11 or the tray 12 as in the first example and first and second embodiments, a disc loading device whose operating quality is high can be obtained without adding new parts to a conventional disc loading device.

### Industrial Applicability

As described above, the disc loading device pertaining to this invention can be used not only in compact disc players but in various types of disc loading devices like DVD players.

## Claims

1. A disc loading device comprising:
a tray (12) in which a disc is to be placed;
a main chassis (11) having a front side into which the tray is loaded and from which the tray is unloaded;
a guide groove (12a) disposed parallel to a loading/unloading direction in the tray and having a front section, a step (13) and a rear section narrower than the front section;
guides (11a, 11b, 11c) that are disposed in the main chassis and which engage with the guide groove (12a);
**characterised by**:
an elastic body (11d) disposed integral with the main chassis (11) and in the vicinity of) the front side of the chassis (11) to press a side wall of the rear section of the guide groove (12a) and the guides (11a, 11b, 11c) into contact, only when the tray is in the vicinity of its unloaded position.

2. The disc loading device of claim 1, wherein the elastic body (11d) has a U shape in cross-section.

3. The disc loading device of claim 1 or claim 2 wherein there are a plurality of guides (11a, 11b, 11c) disposed to engage with the guide groove (12a) when the tray (12) is in the vicinity of the front side of the chassis, and the elastic body (11d) is disposed between adjacent such guides.

4. The disc loading device of claim 1 or claim 2 wherein there are a plurality of elastic bodies (11d) disposed to press a side wall of the guide groove (12a) and the guides (11 a, 11b, 11c) into contact in a direction (X) perpendicular to the loading/unloading direction of the tray (12) and parallel to a plane on which the disc is to be placed when the tray (12) is in the vicinity of the front side of the chassis, and the guides (11a, 11b, 11c) are disposed between adjacent such elastic bodies (11d).

## Patentansprüche

1. Disc-Einschubvorrichtung umfassend:
ein Fach (12), in das eine Disc gelegt wird;
ein Hauptgehäuse (11) mit einer Vorderseite, in die das Fach eingeschoben wird und aus der das Fach ausgeschoben wird;
eine Führungsrille (12a), die parallel zu einer Einschiebe-/Ausschieberichtung im Fach angeordnet ist und einen vorderen Abschnitt, eine Stufe(13) und einen hinteren Abschnitt aufweist, der enger als der vordere Abschnitt ist;
Führungen (11a, 11b, 11c), die im Hauptgehäuse angeordnet sind, und die mit der Führungsrille (12a) in Eingriff gebracht werden;
**gekennzeichnet durch**:
einen elastischen Körper (11d), der integrierend mit dem Hauptgehäuse (11) und in der Nähe der Vorderseite des Gehäuses (11) angeordnet ist, um eine Seitenwand des hinteren Abschnitts der Führungsrille (12a) und die Führungen (11a, 11b, 11c) in Kontakt zu drücken, nur wenn das Fach in der Nähe seiner ausgeschobenen Position ist.

2. Disc-Einschubvorrichtung nach Anspruch 1, wobei der elastische Körper (11d) einen U-förmigen Querschnitt aufweist.

3. Disc-Einschubvorrichtung nach Anspruch 1 oder 2, wobei mehrere Führungen (11a, 11b, 11c) angeordnet sind, um mit der Führungsrille (12a) in Eingriff gebracht zu werden, wenn das Fach (12) sich in der Nähe der Vorderseite des Gehäuses befindet und der elastische Körper (11d) zwischen benachbarten derartigen Führungen angeordnet ist.

4. Disc-Einschubvorrichtung nach Anspruch 1 oder 2, wobei mehrere elastische Körper (11d) angeordnet sind, um eine Seitenwand der Führungsrille (12a) und die Führungen (11a, 11b, 11c) in einer Richtung (X) in Kontakt zu drücken, die senkrecht zur Einschiebe-/Ausschieberichtung des Fachs (12) und parallel zu einer Ebene ist, auf der die Disc positioniert wird, wenn das Fach (12) sich in der Nähe der Vorderseite des Gehäuses befindet, und die Führungen (11a, 11b, 11c) zwischen benachbarten derartigen elastischen Körpern (11d) angeordnet sind.

## Revendications

1. Dispositif de chargement de disque, comprenant :
un plateau (12) dans lequel un disque doit être placé;
un châssis principal (11) ayant un côté avant dans lequel le plateau est chargé et à partir duquel le plateau est déchargé;
une rainure de guidage (12a) disposée parallèlement à une direction de chargement/déchargement dans le plateau et ayant une section avant, un palier (13) et une section arrière plus étroite que la section avant;
des guides (11a, 11b, 11c) qui sont disposés dans le châssis principal et qui se mettent en prise avec la rainure de guidage (12a);
**caractérisé par**:
un corps élastique (11d) disposé de manière solidaire avec le châssis principal (11) et à proximité du côté avant du châssis (11) pour comprimer une paroi latérale de la section arrière de la rainure de guidage (12a) et les guides (11a, 1b, 11c) en contact, uniquement lorsque le plateau est à proximité de sa position déchargée.

2. Dispositif de chargement de disque selon la revendication 1, dans lequel le corps élastique (11d) a une forme de U en coupe.

3. Dispositif de chargement de disque selon la revendication 1 ou la revendication 2, dans lequel il y a une pluralité de guides (11a, 11b, 11c) disposés pour se mettre en prise avec la rainure de guidage (12a) lorsque le plateau (12) est à proximité du côté avant du châssis, et le corps élastique (11d) est disposé entre de tels guides adjacents.

4. Dispositif de chargement de disque selon la revendication 1 ou la revendication 2, dans lequel il y a une pluralité de corps élastiques (11d) disposés pour comprimer une paroi latérale de la rainure de guidage (12a) et les guides (11a, 11b, 11c) en contact dans une direction (X) perpendiculaire à la direction de chargement/déchargement du plateau (12) et parallèle à un plan sur lequel le disque doit être placé lorsque le plateau (12) est à proximité du côté avant du châssis, et que les guides (11a, 11b, 11c) sont disposés entre de tels corps élastiques (11d) adjacents.
